# EUROPEAN PATENT SPECIFICATION

(11) **EP 2 562 007 B1**
(45) Date of publication and mention of the grant of the patent: **16.07.2014**
(21) Application number: 12191231.5
(22) Date of filing: 24.08.2009
(51) Int. Cl.: B60C 9/04, B60C 15/00

(54) **Modular ply tire with overlapping plies**
Modularer Lagenreifen mit sich überlappenden Lagen
Pneu à plis modulaires avec chevauchement de plis

(30) Priority: 29.08.2008 US 201040
(43) Date of publication of application: 27.02.2013
(62) Divisional of application: 09168499.3
(73) Proprietor: The Goodyear Tire & Rubber Company, Akron, OH 44316-0001 (US)
(72) Inventor: Neubauer, Robert Anthony, Medina, OH Ohio 44256 (US); Trares, Keith Carl, Akron, OH Ohio 44319 (US)
(74) Representative: Kutsch, Bernd

(56) References cited:
- EP-A- 0 484 831
- EP-A- 2 014 451
- DE-A1- 2 136 169
- DE-A1- 3 539 083
- FR-A- 1 301 159
- FR-A- 1 406 196
- FR-A- 2 376 762
- NL-A- 6 700 931
- US-A- 3 581 793
- US-B1- 6 267 166

## Description

### Background of the Invention

### A. Field of Invention

This invention relates to a tire carcass and to a pneumatic tire with such a carcass, and more particularly to a modular ply tire with overlapping plies in the crown area.

### B. Description of the Related Art

US-A-6,913,052 discloses a tire construction and method of building a tire which includes the steps of cylindrically applying a pair of radial cord reinforced sidewall plies; fixing the axial spacing between the bead cores; applying a crown ply; turning up each sidewall ply to overlap lateral edges of the crown ply; and moving the carcass assembly axially inwardly while shaping the carcass assembly toroidially to form ply turnups axially inwardly of the bead cores.

US-A-6,883,570 discloses a tire comprising at least one reinforcement structure of carcass type anchored on each side of the tire in a bead, said reinforcement structure being discontinuous over at least a portion of the crown of the tire.

US-A-6,883,571 discloses a tire comprising at least one reinforcement structure of carcass type anchored on each side of the tire in a bead, the carcass-type reinforcement structure extending circumferentially from the bead towards said sidewall and being discontinuous over at least a portion of the crown of the tire. The crown reinforcement comprises on the one hand at least one primary reinforcement structure covering substantially the entire width of the crown and on the other hand a series of circumferential reinforcements also covering substantially the entire width of the crown.

Document FR-A-2 376 762 discloses the features of the preamble of claim 1.

### II. Summary of the Invention

The invention relates to a tire carcass according to claim 1 and to a tire comprising such a carcass according to claim 11.

Dependent claims 2 to 10 and 12 refer to preferred embodiments of the invention.

According to one embodiment of this invention, a tire carcass includes a first ply with a first shoulder portion and a first lateral edge portion, the first lateral edge portion being wrapped around a bead core, a carcass crown portion, the carcass crown portion having a first edge and a second edge, and a second ply with a second shoulder portion and a second lateral edge, the second lateral edge portion being wrapped around a second bead core, the first ply extending beyond the first edge of the carcass crown portion and the second ply extending beyond the second edge of the carcass crown portion, and wherein the carcass has a center line perpendicular to the bead core, wherein the first ply is at an angle of less than approximately 85º with respect to the center line, and the second ply is at an angle of less than approximately 85º with respect to the center line; or wherein the first ply is at an angle of less than approximately -85º with respect to the center line, and the second ply is at an angle less than approximately -85º with respect to the center line.

According to a preferred embodiment of the invention, the first ply and second ply extend beyond the edges of the carcass crown portion such that the plies overlap each other.

According to another preferred embodiment of the invention, the first ply extends to the second edge and the second ply extends to the first edge.

According to another embodiment of this invention, a pneumatic tire includes a tire carcass according to claims 1 to 10.

One advantage of this invention may be seen in that it allows two plies to be in the crown portion of the tire instead of only one ply for instance. Such a two ply crown construction provides increased puncture resistance compared to a one ply construction. On the other hand and compared to in particular three ply constructions, the invention allows it to consolidate such three ply constructions by eliminating a centerply into a two ply construction. This approach results in a tire with lower weight via reduced material use and accordingly also lower costs.

Another advantage of this invention is that angling the plies at angles less than 85°, preferably less than 75° (or less than -85° or -75° respectively) provides a tunability of the tire so that the tire performance can be easily adjusted to match specific needs.

Another advantage of this invention is that the first ply and the second ply may be made with different materials, i.e. with different reinforcement materials,, which again provides a tunability of the tire so that the tire performance can be easily adjusted to match specific needs.

### III. Brief Description of the Drawings

The invention may take physical form in certain parts and arrangement of parts, embodiments of which will be described in detail in this specification and illustrated in the accompanying drawings which form a part hereof and wherein:
FIGURE 1 is a cross-section of the ply section of a tire showing the overlapping ply construction; and,
FIGURE 2 is a cross-section of the ply-section of a tire, showing belts and the overlapping ply construction.

### IV. Definitions

"Axial" and "axially" mean the lines or directions that are parallel to the axis of rotation of the tire.

"Carcass" means the tire structure apart from the belt structure, tread, undertread, and sidewall rubber over the plies, but including bead cores.

"Carcass crown portion" means the portion of the carcass over which the crown is placed.

"Crown" or "tire crown" means the tread, tread shoulders, and the immediately adjacent portions of the sidewalls.

"Interior" means, generally, the inside surface of the tire.

"Exterior" means, generally, the outside surface of the tire.

"Radial" and "radially" mean directions toward or away from the axis of rotation of the tire.

"Sidewall" means that component which comprises a portion of the outside surface of a tire between the tread and the bead.

### V. Detailed Description of the Invention

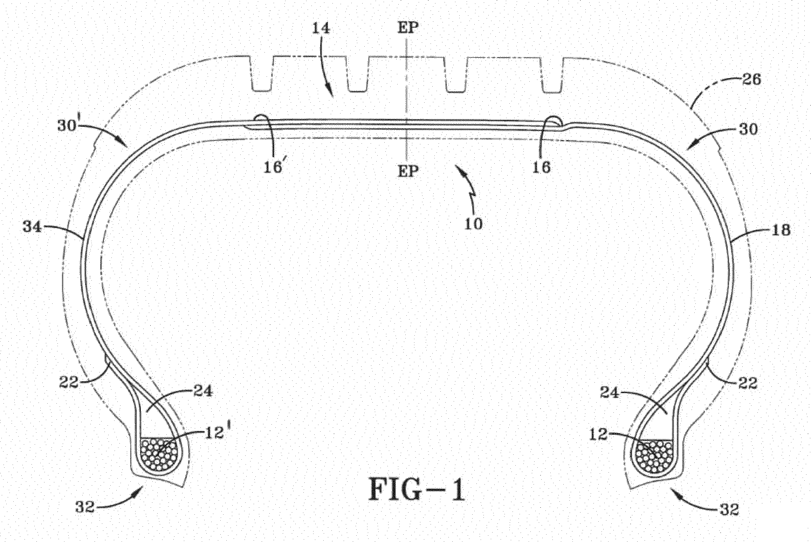

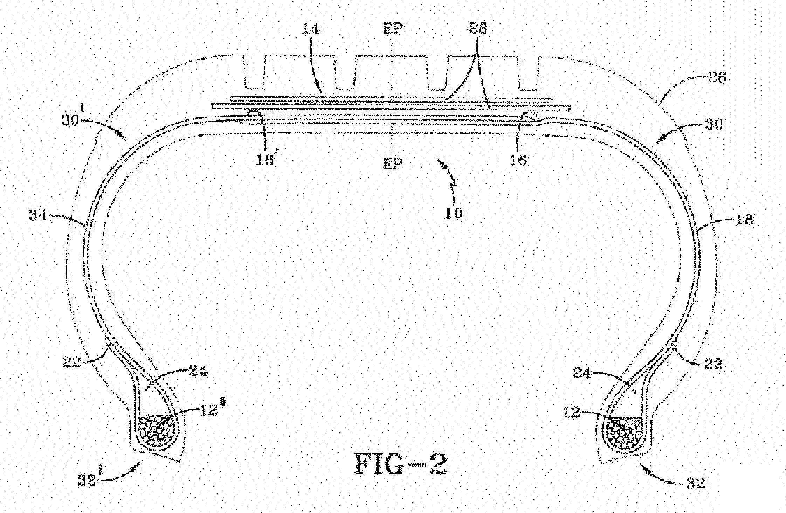

FIGURE 1 shows a tire carcass 10, having two beads 12, 12', a carcass crown portion 14 (wherein the carcass crown portion 14 has a first edge 16 and a second edge 16'), a first, preferably radial ply 18, a second, preferably radial ply 34, turn-up ends 22, apexes 24, shoulders 30 and bead regions 32, 32'. The bead regions 32, 32' have a pair of axially spaced beads 12, 12' around which are wrapped turn-up ends 22. The apexes 24 are sandwiched between the main body of the carcass 10 and the turn-up ends 22. Radially outside of the tire carcass 10 is a tread 26. In FIGURE 2, the carcass 10 is shown with belts 28 on top overlaying the carcass crown portion 14.

With continuing reference to FIGURES 1 and 2, the first radial ply 18, in this embodiment, extends to the second edge 16' and the second radial ply 34 extends to the first edge 16, such that the first radial ply 18 and the second radial ply 34 overlap. It is to be understood that the invention does require the plies 18, 34 to extend to the edges 16, 16', but only that the plies 18, 34 overlap. This allows the elimination of a center ply material.

With continuing reference now to FIGURES 1 and 2, the different plies 18, 34 can be made of different material, which provides tunability for the tire. In this embodiment, the plies 18, 34 are at an angle of less than approximately 85°, with respect to a centerline running parallel to the cross-section, i.e. perpendicular to the equatorial plane EP of the tire. This angling of the plies 18, 34 also allows for tunability of the tire. The plies 18, 34 can be angled in the same direction, or can be angled in different directions. The centerline is perpendicular to the bead core. It is to be understood that the angling of the plies 18, 34 is merely one embodiment of the invention, and is not intended to limit the invention in any manner.

## Claims

1. A tire carcass comprising:
a first ply (18) with a first shoulder portion (30) and a first lateral edge portion, the first lateral edge portion being wrapped around a first bead core (12);
a carcass crown portion (14), the carcass crown portion (14) having a first edge (16) and a second edge (16');
a second ply (34) with a second shoulder portion (30') and a second lateral edge portion, the second lateral edge portion being wrapped around a second bead core (12'), the first ply (18) extending beyond the first edge (16) of the carcass crown portion (14) and the second ply (34) extending beyond the second edge (16') of the carcass crown portion (14); and wherein
the carcass (10) has a center line perpendicular to the bead cores (12, 12'); **characterized in that**
the first ply (18) is at an angle of less than 85º with respect to the center line and the second ply (34) is at an angle of less than 85º with respect to the center line; or **in that** the first ply (18) is at an angle of less than -85º with respect to the center line and the second ply (34) is at an angle less than -85º with respect to the center line.

2. The tire carcass of claim 1, wherein the first ply (18) and second ply (34) extend beyond the edges (16, 16') of the carcass crown portion (14) such that the first and second ply (18, 34) overlap each other.

3. The tire carcass of claim 1 or 2, wherein the first ply (18) extends to the second edge (16') and the second ply (34) extends to the first edge (16').

4. The tire carcass of at least one of the previous claims, wherein the first ply (18) is wrapped around only the first bead core (12) and the second ply (34) is wrapped around only the second bead core (12').

5. The tire carcass of at least one of the previous claims, wherein the carcass crown portion (14) extends between the first shoulder portion (30) and the second shoulder portion (30") and wherein the first ply (18) and the second ply (34) overlap in the carcass crown portion (14).

6. The tire carcass of at least one of the previous claims, wherein the carcass (10) comprises only two plies, namely the first ply (18) and the second ply (34).

7. The tire carcass of at least one of the previous claims, wherein the lateral width of the overlap of the first and second ply (18, 34) in the crown portion (14) is in a range of from 35% to 65% of the maximum lateral tire carcass width as measured from the outside of the first shoulder portion (30) to the outside of the second shoulder portion (30').

8. The tire carcass of claim 7, wherein the lateral width of the overlap of the first and second ply (18, 34) in the crown portion (14) is in a range of from 45% to 55%, alternatively about 50%, of the maximum lateral tire carcass width as measured from the outside of the first shoulder portion (30) to the outside of the second shoulder portion (30').

9. The tire carcass of at least one of the previous claims, wherein the first ply (18) is at an angle in a range of from 75º to 85º with respect to the center line and the second ply (34) is at an angle in a range of from 75º to 85º with respect to the center line; or wherein the first ply (18) is at an angle in a range of from -75º to -85º with respect to the center line and the second ply (34) is at an angle in a range of from -75º to -85º with respect to the center line.

10. The tire carcass of at least one of the previous claims, wherein the first ply (18) and the second ply (34) comprise different materials, i.e. with different reinforcement materials and/or different rubber materials.

11. A pneumatic tire comprising a tire carcass according to at least one of the previous claims.

12. The pneumatic tire according to claim 11 further comprising a belt structure (28) overlapping the radially outer side of the carcass crown portion (14).

## Patentansprüche

1. Reifenkarkasse, umfassend:
eine erste Lage (18) mit einem ersten Schulterteil (30) und einem ersten seitlichen Randteil, wobei der erste seitliche Randteil um einen ersten Wulstkern (12) herumgeschlagen ist;
einen Karkassenzenitteil (14), wobei der Karkassenzenitteil (14) einen ersten Rand (16) und einen zweiten Rand (16`) aufweist; und
eine zweite Lage (34) mit einem zweiten Schulterteil (30') und einem zweiten seitlichen Randteil, wobei der zweite seitliche Randteil um einen zweiten Wulstkern (12') herumgeschlagen ist, wobei die erste Lage (18) sich über den ersten Rand (16) des Karkassenzenitteils (14) hinaus erstreckt und die zweite Lage (34) sich über den zweiten Rand (16`) des Karkassenzenitteils (14) hinaus erstreckt; und wobei
die Karkasse (10) eine Mittellinie senkrecht zu den Wulstkernen (12, 12') aufweist,
**dadurch gekennzeichnet, dass**
die erste Lage (18) in einem Winkel von weniger als 85° in Bezug zur Mittellinie liegt und die zweite Lage (34) in einem Winkel von weniger als 85° in Bezug zur Mittellinie liegt; oder dass die erste Linie (18) in einem Winkel von weniger als -85° in Bezug zur Mittellinie liegt und die zweite Lage (34) in einem Winkel von weniger als -85° in Bezug zur Mittellinie liegt.

2. Reifenkarkasse nach Anspruch 1, wobei die erste Lage (18) und zweite Lage (34) sich über die Ränder (16, 16') des Karkassenzenitteils (14) hinaus erstrecken, sodass die erste und zweite Lage (18, 34) einander überlappen.

3. Reifenkarkasse nach Anspruch 1 oder 2, wobei die erste Lage (18) sich bis zu dem zweiten Rand (16') erstreckt und die zweite Lage (34) sich bis zu dem ersten Rand (16') erstreckt.

4. Reifenkarkasse nach mindestens einem der vorgenannten Ansprüche, wobei die erste Lage (18) nur um den ersten Wulstkern (12) herumgeschlagen ist und die zweite Lage (34) nur um den zweiten Wulstkern (12') herumgeschlagen ist.

5. Reifenkarkasse nach mindestens einem der vorgenannten Ansprüche, wobei der Karkassenzenitteil (14) sich zwischen dem ersten Schulterteil (30) und dem zweiten Schulterteil (30") erstreckt und wobei die erste Lage (18) und die zweite Lage (34) sich in dem Karkassenzenitteil (14) überlappen.

6. Reifenkarkasse nach mindestens einem der vorgenannten Ansprüche, wobei die Karkasse (10) nur zwei Lagen umfasst, nämlich die erste Lage (18) und die zweite Lage (34).

7. Reifenkarkasse nach mindestens einem der vorgenannten Ansprüche, wobei die seitliche Breite der Überlappung der ersten und zweiten Lage (18, 34) in dem Zenitteil (14) in einem Bereich von 35% bis 65% der maximalen seitlichen Reifenkarkassenbreite liegt, gemessen von der Außenseite des ersten Schulterteils (30) bis zur Außenseite des zweiten Schulterteils (30').

8. Reifenkarkasse nach Anspruch 7, wobei die seitliche Breite der Überlappung der ersten und zweiten Lage (18, 34) in dem Zenitteil (14) in einem Bereich von 45% bis 55%, alternativ etwa 50%, der maximalen seitlichen Reifenkarkassenbreite liegt, gemessen von der Außenseite des ersten Schulterteils (30) bis zur Außenseite des zweiten Schulterteils (30').

9. Reifenkarkasse nach mindestens einem der vorgenannten Ansprüche, wobei die erste Lage (18) in einem Winkel von 75° bis 85° in Bezug zu der Mittellinie liegt und die zweite Lage (34) in einem Winkel von 75° bis 85° in Bezug zu der Mittellinie liegt; oder wobei die erste Lage (18) in einem Winkel von -75° bis -85° in Bezug zu der Mittellinie liegt und die zweite Lage (34) in einem Winkel von 75° bis -85° in Bezug zu der Mittellinie liegt.

10. Reifenkarkasse nach mindestens einem der vorgenannten Ansprüche, wobei die erste Lage (18) und die zweite Lage (34) verschiedene Materialien umfassen, d.h. mit verschiedenen Verstärkungsmaterialien und/oder verschiedenen Gummimaterialien.

11. Luftreifen, umfassend eine Reifenkarkasse nach mindestens einem der vorgenannten Ansprüche.

12. Luftreifen nach Anspruch 11, weiter eine Gürtelstruktur (28) umfassend, welche die radial äußere Seite des Karkassenzenitteils (14) überlappt.

## Revendications

1. Carcasse de bandage pneumatique comprenant :
une première nappe (18) comprenant une première portion (30) faisant office d'épaulement et une première portion faisant office de bord latéral, la première portion faisant office de bord latéral venant s'enrouler autour d'une première tringle de talon (12) ;
une portion (14) faisant office de sommet de carcasse, la portion (14) faisant office de sommet de carcasse possédant un premier bord (16) et un deuxième bord (16') ; et
une deuxième nappe (34) comprenant une deuxième portion (30') faisant office d'épaulement et une deuxième portion faisant office de bord latéral, la deuxième portion faisant office de bord latéral venant s'enrouler autour d'une deuxième tringle de talon (12'), la première nappe (18) s'étendant au-delà du premier bord (16) de la portion (14) faisant office de sommet de carcasse et la deuxième nappe (34) s'étendant au-delà du deuxième bord (16') de la portion (14) faisant office de de sommet de carcasse ; et dans laquelle
la carcasse (10) possède une ligne médiane perpendiculaire aux deux talons (12, 12') ; **caractérisée en ce que**
la première nappe (18) forme un angle inférieur à 85° par rapport à la ligne médiane et la deuxième nappe (34) forme un angle inférieur à 85° par rapport à la ligne médiane ; ou **en ce que** la première nappe (18) forme un angle inférieur à -85° par rapport à la ligne médiane et la deuxième nappe (34) forme un angle inférieur à -85° par rapport à la ligne médiane.

2. Carcasse de bandage pneumatique selon la revendication 1, dans laquelle la première nappe (18) et la deuxième nappe (34) s'étendent au-delà des bords (16, 16') de la portion (14) faisant office de sommet de carcasse, de telle sorte que la première et la deuxième nappe (18, 34) se chevauchent l'une l'autre.

3. Carcasse de bandage pneumatique selon la revendication 1 ou 2, dans laquelle la première nappe (18) s'étend jusqu'au deuxième bord (16') et la deuxième nappe (34) s'étend jusqu'au premier bord (16).

4. Carcasse de bandage pneumatique selon au moins une des revendications précédentes, dans laquelle la première nappe (18) vient s'enrouler autour uniquement de la première tringle de talon (12) et la deuxième nappe (34) et vient s'enrouler autour uniquement de la deuxième tringle de talon (12').

5. Carcasse de bandage pneumatique selon au moins une des revendications précédentes, dans laquelle la portion (14) faisant office de sommet de carcasse s'étend entre la première portion (30) faisant office d'épaulement et la deuxième portion (30') faisant office d'épaulement, et dans laquelle la première nappe (18) et la deuxième nappe (34) se chevauchent dans la portion (14) faisant office de sommet de carcasse.

6. Carcasse de bandage pneumatique selon au moins une des revendications précédentes, dans laquelle la carcasse (10) comprend seulement deux nappes, plus précisément la première nappe (18) et la deuxième nappe (34).

7. Carcasse de bandage pneumatique selon au moins une des revendications précédentes, dans laquelle la largeur latérale du chevauchement de la première et de la deuxième nappe (18, 34) dans la portion (14) faisant office de sommet se situe dans la plage de 35 % à 65 % de la largeur latérale maximale de la carcasse du bandage pneumatique telle qu'on la mesure depuis l'extérieur de la première portion (30) faisant office d'épaulement jusqu'à l'extérieur de la deuxième portion (30') faisant office d'épaulement.

8. Carcasse de bandage pneumatique selon la revendication 7, dans laquelle la largeur latérale du chevauchement de la première et de la deuxième nappe (18, 34) dans la portion (14) faisant office de sommet se situe dans la plage de 45 % à 55 %, en variante à concurrence d'environ 50 %, de la largeur latérale maximale de la carcasse du bandage pne le umatique telle qu'on la mesure depuis l'extérieur de la première portion (30) faisant office d'épaulement jusqu'à l'extérieur de la deuxième portion (30') faisant office d'épaulement.

9. Carcasse de bandage pneumatique selon au moins une des revendications précédentes, dans laquelle la première nappe (18) forme un angle dans la plage de 75° à 85° par rapport à la ligne médiane et la deuxième nappe (34) forme un angle dans la plage de 75° à 85° par rapport à la ligne médiane ; ou dans laquelle la première nappe (18) forme un angle dans la plage de -75° à -85° par rapport à la ligne médiane et la deuxième nappe (34) forme un angle dans la plage de -75° à -85° par rapport à la ligne médiane.

10. Carcasse de bandage pneumatique selon au moins une des revendications précédentes, dans laquelle la première nappe (18) et la deuxième nappe (34) comprennent des matières différentes, c'est-à-dire avec des matières de renforcement différentes et/ou des matières de caoutchouc différentes.

11. Bandage pneumatique comprenant une carcasse de bandage pneumatique selon au moins une des revendications précédentes.

12. Bandage pneumatique selon la revendication 11, comprenant en outre une structure de ceinture (28) chevauchant le côté externe en direction radiale de la portion (14) faisant office de sommet de carcasse.
